# EUROPEAN PATENT SPECIFICATION

(11) **EP 2 650 681 B1**
(45) Date of publication and mention of the grant of the patent: **30.12.2015**
(21) Application number: 13001906.0
(22) Date of filing: 12.04.2013
(51) Int. Cl.: G01N 30/78, G01N 30/88, B01J 19/00

(54) **Radiopharmaceutical production system and quality control system utilizing high performance liquid chromatography**
Radiopharmazeutisches Produktionssystem und Qualitätskontrollsystem mit Verwendung von Hochleistungs-Flüssigchromatographie
Système de production radio-pharmaceutique et système de contrôle de qualité utilisant la chromatographie liquide haute performance

(30) Priority: 13.04.2012 US 201213446334
(43) Date of publication of application: 16.10.2013
(73) Proprietor: ABT Molecular Imaging, Inc., Louisville, Tennessee 37777 (US)
(72) Inventor: Nutt, Ronald, Friendsville, TN 37737 (US); Giamis, Anthony M., Green Oaks, IL 60048 (US); McFarland, Aaron, Knoxville, TN 37922 (US)
(74) Representative: Sawodny, Michael-Wolfgang

(56) References cited:
- US-A1- 2010 145 630
- US-A1- 2011 070 160
- CROUZEL C ET AL: "Radiochemistry automation for PET", 1 January 1993 (1993-01-01), RADIOPHARMACEUTICALS FOR POSITRON EMISSION TOMOGRAPHY: METHODOLOGICAL ASPECTS, KLUWER ACADEMIC PUBLISHERS, PAGE(S) 45 - 79, XP009135416, ISBN: 978-0-7923-2340-2 * section 5.7; page 58 - page 61; figure 6 * * section 5.9; page 63 - page 66; figures 9,10 *
- "9.1 Detectors" In: James M. Miller: "Chromatography - Concepts and Contrasts", 2005, Wiley-Interscience, XP002708718, ISBN: 0-471-47207-7 pages 278-284, * page 278 - page 284; table 9.1 *
- Unknown: "Lesson 6: Detectors for HPLC", Shodex Applications HPLC 101 , XP002708717, Retrieved from the Internet: URL:http://www.shodex.net/?lang=2&applic=1 485 [retrieved on 2013-08-01]
- KOZIOROWSKI ET AL: "A simple method for the quality control of [<18>F]FDG", APPLIED RADIATION AND ISOTOPES, ELSEVIER, OXFORD, GB, vol. 68, no. 9, 1 September 2010 (2010-09-01), pages 1740-1742, XP027067313, ISSN: 0969-8043, DOI: 10.1016/J.APRADISO.2010.03.006 [retrieved on 2010-03-06]
- MOERLEIN S M ET AL: "Robotic preparation of Sodium Acetate C 11 Injection for use in clinical PET", NUCLEAR MEDICINE AND BIOLOGY, ELSEVIER, NY, US, vol. 29, no. 5, 1 July 2002 (2002-07-01), pages 613-621, XP004367639, ISSN: 0969-8051, DOI: 10.1016/S0969-8051(02)00307-4
- DENUTTE H ET AL: "Remote-controlled, photosynthetic preparation of HPLC-purified [<11>C]glucose", INTERNATIONAL JOURNAL OF APPLIED RADIATION AND ISOTOPS, PERGAMON PRESS, NEW YORK, NY, US, vol. 36, no. 1, 1 January 1985 (1985-01-01), pages 82-84, XP024626175, ISSN: 0020-708X, DOI: 10.1016/0020-708X(85)90060-2 [retrieved on 1985-01-01]
- GEERD-J MEYER ET AL: "QUALITY ASSURANCE AND QUALITY CONTROL OF SHORT-LIVED RADIOPHARMACEUTICALS FOR PET", 1 January 1993 (1993-01-01), RADIOPHARMACEUTICALSFOR POSITRON EMISSION TOMOGRAPHY (BOOK SERIES: DEVELOPMENTS IN NUCLEAR MEDICINE), KLUWER ACADEMIC PUBLISHERS, PAGE(S) 91 - 150, XP009171647, ISBN: 978-90-481-4285-9 * section 2.5.; page 94 - page 97 *
- YU S: "Review of 18F-FDG synthesis and quality control", BIOMEDICAL IMAGING AND INTERVENTION JOURNAL, UNIVERSITY OF MALAYA, MY, vol. 2, no. 4, 1 January 2006 (2006-01-01) , pages 1-11, XP002589664, ISSN: 1823-5530, DOI: 10.2349/BIIJ.2.4.E57 [retrieved on 2006-01-01]

## Description

### CROSS-REFERENCE TO RELATED APPLICATIONS

This Application is a continuation-in-part of U.S. Patent Application Number 12/565,544, filed September 23, 2009, and a continuation-in-part of U.S. Patent Application Number 12/565,552, filed September 23, 2009.

### STATEMENT REGARDING FEDERALLY-SPONSORED RESEARCH OR DEVELOPMENT

Not Applicable

### BACKGROUND OF THE INVENTION

### 1. Field of Invention

This invention relates to chemical apparatuses and processes for synthesizing, purifying, and conducting quality control tests on radiopharmaceuticals for use in positron emission tomography (PET). Specifically, the present invention relates to systems for analyzing a liquid sample of PET biomarker.

### 2. Description of the Related Art

A biomarker is used to interrogate a biological system and can be created by "tagging" or labeling certain molecules, including biomolecules, with a radioisotope. A biomarker that includes a positron-emitting radioisotope is required for positron-emission tomography (PET), a noninvasive diagnostic imaging procedure that is used to assess perfusion or metabolic, biochemical and functional activity in various organ systems of the human body. Because PET is a very sensitive biochemical imaging technology and the early precursors of disease are primarily biochemical in nature, PET can detect many diseases before anatomical changes take place and often before medical symptoms become apparent. PET is similar to other nuclear medicine technologies in which a radiopharmaceutical is injected into a patient to assess metabolic activity in one or more regions of the body. However, PET provides information not available from traditional imaging technologies, such as magnetic resonance imaging (MRI), computed tomography (CT) and ultrasonography, which image the patient's anatomy rather than physiological images. Physiological activity provides a much earlier detection measure for certain forms of disease, cancer in particular, than do anatomical changes over time.

A positron-emitting radioisotope undergoes radioactive decay, whereby its nucleus emits positrons. In human tissue, a positron inevitably travels less than a few millimeters before interacting with an electron, converting the total mass of the positron and the electron into two photons of energy. The photons are displaced at approximately 180 degrees from each other, and can be detected simultaneously as "coincident" photons on opposite sides of the human body. The modem PET scanner detects one or both photons, and computer reconstruction of acquired data permits a visual depiction of the distribution of the isotope, and therefore the tagged molecule, within the organ being imaged.

Most clinically-important positron-emitting radioisotopes are produced in a cyclotron. Cyclotrons operate by accelerating electrically-charged particles along outward, quasi-spherical orbits to a predetermined extraction energy generally on the order of millions of electron volts. The high-energy electrically-charged particles form a continuous beam that travels along a predetermined path and bombards a target. When the bombarding particles interact in the target, a nuclear reaction occurs at a sub-atomic level, resulting in the production of a radioisotope. The radioisotope is then combined chemically with other materials to synthesize a radiochemical or radiopharmaceutical (hereinafter "radiopharmaceutical") suitable for introduction into a human body. The cyclotrons traditionally used to produce radioisotopes for use in PET have been large machines requiring great commitments of physical space and radiation shielding. These requirements, along with considerations of cost, made it unfeasible for individual hospitals and imaging centers to have facilities on site for the production of radiopharmaceuticals for use in PET.

Thus, in current standard practice, radiopharmaceuticals for use in PET are synthesized at centralized production facilities. The radiopharmaceuticals then must be transported to hospitals and imaging centers up to 200 miles away. Due to the relatively short half-lives of the handful of clinically important positron-emitting radioisotopes, it is expected that a large portion of the radioisotopes in a given shipment will decay and cease to be useful during the transport phase. To ensure that a sufficiently large sample of active radiopharmaceutical is present at the time of the application to a patient in a PET procedure, a much larger amount of radiopharmaceutical must be synthesized before transport. This involves the production of radioisotopes and synthesis of radiopharmaceuticals in quantities much larger than one (1) unit dose, with the expectation that many of the active atoms will decay during transport.

The need to transport the radiopharmaceuticals from the production facility to the hospital or imaging center (hereinafter "site of treatment") also dictates the identity of the isotopes selected for PET procedures. Currently, fluorine isotopes, and especially fluorine-18 (or F-18) enjoy the most widespread use. The F-18 radioisotope is commonly synthesized into [¹⁸F]fluorodeoxyglucose, or [¹⁸F]FDG, for use in PET. F-18 is widely used mainly because its half-life, which is approximately 110 minutes, allows for sufficient time to transport a useful amount. The current system of centralized production and distribution largely prohibits the use of other potential radioisotopes. In particular, carbon-11 has been used for PET, but its relatively short half-life of 20.5 minutes makes its use difficult if the radiopharmaceutical must be transported any appreciable distance. Similar considerations largely rule out the use of nitrogen-13 (half-life: 10 minutes) and oxygen-15 (half-life: 2.5 minutes).

As with any medical application involving the use of radioactive materials, quality control is important in the synthesis and use of PET biomarker radiopharmaceuticals, both to safeguard the patient and to ensure the effectiveness of the administered radiopharmaceutical. For example, for the synthesis of [¹⁸F]FDG from mannose triflate, a number of quality control tests exist. The final [¹⁸F]FDG product should be a clear, transparent solution, free of particulate impurities; therefore, it is important to test the color and clarity of the final radiopharmaceutical solution. The final radiopharmaceutical solution is normally filtered through a sterile filter before administration, and it is advisable to test the integrity of that filter after the synthesized radiopharmaceutical solution has passed through it. The acidity of the final radiopharmaceutical solution must be within acceptable limits (broadly a pH between 4.5 and 7.5 for [¹⁸F]FDG, although this range may be different depending upon the application and the radiopharmaceutical tracer involved). The final radiopharmaceutical solution should be tested for the presence and levels of volatile organics, such as ethanol or methyl cyanide, that may remain from synthesis process. Likewise, the solution should be tested for the presence of crown ethers or other reagents used in the synthesis process, as the presence of these reagents in the final dose is problematic. Further, the radiochemical purity of the final solution should be tested to ensure that it is sufficiently high for the solution to be useful. Other tests, such as tests of radionuclide purity, tests for the presence of bacterial endotoxins, and tests of the sterility of the synthesis system, are known in the art.

At present, most or all of these tests are performed on each batch of radiopharmaceutical, which will contain several doses. The quality control tests are performed separately by human technicians, and completing all of the tests typically requires between 45 and 60 minutes.

US 2010/0145630 A1 as closest state of the art shows a method and an apparatus to assess current aspects of Quality Control useful for release of radioactive compounds for imaging, such as PET tracers as injectables, in an automated manner, without user interference, and in compliance with regulatory guidelines. The method and system according to US 2010/0145630 A1 shows an integrated automated quality control analysis of a substance utilizing a single sample injection for a plurality of inline quality control tests. A quantitative analysis of the sample via the plurality control tests is conducted. A measurement value of each of the plurality of quality control parameters is determined and a comparison of each measurement value of the plurality of quality control parameters with a predetermined corresponding criterion value is made. A cumulative quality rating for the sample is determined and the validated sample is released besed on the quality rating.

Crouzel C. et al. 'Radiochemistry automation for PET' and Meyer G. - J. et al. 'Quality assurance and quality control of short-lived radiopharmaceuticals for PET' published in Radiopharmaceuticals for Positron Emission Tomography: Methodological Aspects, Kluwer Academic Publishers, pages 45-79 and 91-150 (January 1993) disclose the automated synthesis and builit-in quality control by HPLC of various radiochemicals for PET.

Yu S. 'Review of 18F-FDG synthesis and quality control' in Biomedical Imaging and Intervention Journal, vol. 2, no. 4, pages 1-11 (January 2006) covers various synthesis and quality control procedures for 18F-FDG.

### BRIEF SUMMARY OF THE INVENTION

As disclosed herein, in several example embodiments, the present general inventive concept comprises quality control systems incorporating high performance liquid chromatography (HPLC) to perform quality control testing on a radiopharmaceutical solution shortly after synthesis. In several embodiments, an HPLC-based quality control system according to the present general inventive concept makes efficient use of sample volume and is compatible with and able to test a variety of radioisotopes and radiopharmaceutical compounds. In several embodiments, the automated nature of an HPLC-based quality control system according to the present general inventive concept allows for quality control tests to be conducted quickly and with minimal impact on user workflow. Overall, and especially when used as part of an integrated PET biomarker radiopharmaceutical production system as described herein, the present general inventive concept permits a radiopharmaceutical manufacturer to produce product and conduct quality control tests on the product with lower per dose costs.

An accelerator produces per run a maximum quantity of radioisotope that is approximately equal to the quantity of radioisotope required by the microfluidic chemical production module to synthesize a unit dose of biomarker. Chemical synthesis using microreactors or microfluidic chips (or both) is significantly more efficient than chemical synthesis using conventional (macroscale) technology. Percent yields are higher and reaction times are shorter, thereby significantly reducing the quantity of radioisotope required in synthesizing a unit dose of radiopharmaceutical. Accordingly, because the accelerator is for producing per run only such relatively small quantities of radioisotope, the maximum power of the beam generated by the accelerator is approximately two to three orders of magnitude less than that of a conventional particle accelerator. As a direct result of this dramatic reduction in maximum beam power, the accelerator is significantly smaller and lighter than a conventional particle accelerator, has less stringent infrastructure requirements, and requires far less electricity. Additionally, many of the components of the small, low-power accelerator are less expensive than the comparable components of conventional accelerators. Therefore, it is feasible to use the low-power accelerator and accompanying CPM within the grounds of the site of treatment. Because radiopharmaceuticals need not be synthesized at a central location and then transported to distant sites of treatment, less radiopharmaceutical need be produced, and different isotopes, such as carbon-11, may be used if desired.

If the accelerator and CPM are in the basement of the hospital or just across the street from the imaging center, then radiopharmaceuticals for PET can be administered to patients almost immediately after synthesis. However, eliminating or significantly reducing the transportation phase does not eliminate the need to perform quality control tests on the CPM and the resultant radiopharmaceutical solution itself. Still, it is essential to reduce the time required to perform these quality control tests in order to take advantage of the shortened time between synthesis and administration. The traditional 45 to 60 minutes required for quality control tests on radiopharmaceuticals produced in macro scale is clearly inadequate. Further, since the accelerator and the CPM are producing a radiopharmaceutical solution that is approximately just one (1) unit dose, it is important that the quality control tests not use too much of the radiopharmaceutical solution; after some solution has been sequestered for testing, enough radiopharmaceutical solution must remain to make up an effective unit dose.

In one example embodiment of the present general inventive concept, a high-performance-liquid-chromatography-based quality control testing system to test a sample radiopharmaceutical solution comprises a high performance liquid chromatography column to receive a sample radiopharmaceutical solution. This high performance liquid chromatography column separates molecularly distinct species within the sample radiopharmaceutical solution into a number of separated molecularly distinct species. A refractive index detector measures the amount of each separated molecularly distinct species from said high performance liquid chromatography column, and a radiation detector measures the radioactivity of each separated molecularly distinct species from said high performance liquid chromatography column.

In one example embodiment of the present general inventive concept, an HPLC-based quality control testing system to test a sample radiopharmaceutical solution comprises a valve (in some embodiments, an injection valve) to direct the flow of a sample radiopharmaceutical solution within the system; a sample radiopharmaceutical solution pumping mechanism to direct the sample radiopharmaceutical solution to the valve; a first sample collection vessel to receive a first part of the sample radiopharmaceutical solution from said injection valve, said first sample collection vessel to hold the first part of the sample radiopharmaceutical solution for endotoxicity testing; a fluid loop in fluid communication with said injection valve, said fluid loop to receive a second part of the sample radiopharmaceutical solution; a high performance liquid chromatography column to receive the second part of the sample radiopharmaceutical solution, said high performance liquid chromatography column to separate molecularly distinct species within the second part of the sample radiopharmaceutical solution into a number of separated molecularly distinct species; a refractive index detector to measure the amount of each separated molecularly distinct species from said high performance liquid chromatography column; and a radiation detector to measure the radioactivity of each separated molecularly distinct species from said high performance liquid chromatography column. The inventive system includes a high performance liquid chromatography pump to direct a mobile phase solvent to the valve and the HPLC column. The HPLC-based quality control testing system according to the present general inventive concept also further comprises an ultraviolet-light detector or UV/VIS detector to measure the optical qualities of the second part of the sample radiopharmaceutical solution. In some embodiments, the ultraviolet-light detector or UV/VIS detector measures the optical qualities of the second part of the sample radiopharmaceutical solution before the second part of the sample radiopharmaceutical solution enters the high performance liquid chromatography column. Additionally, many embodiments of the present general inventive concept include a pH detector to measure the pH of the sample radiopharmaceutical solution. Further, in some embodiments, the system also includes an automated endotoxin detector to perform endotoxicity testing on the first part of the sample radiopharmaceutical solution held in the first sample collection vessel. In some embodiments, the automated endotoxin detector includes a kinetic hemocyte lysate-based assay.

The HPLC-based quality control testing system according to the present general inventive concept includes a radiation detector that comprises at least two radiation probes, with a first radiation probe to measure the radioactivity of a part of the sample radiopharmaceutical solution that has not passed through said high performance liquid chromatography column and a second radiation probe to measure the radioactivity of each separated molecularly distinct species from said high performance liquid chromatography column.

Beside the HPLC based quality control testing a method for conducting quality control tests in real time on a radiopharmaceutical is disclosed. Said method comprises: introducing into a reaction vessel a radioisotope and at least one reagent for synthesis of a preselected radiopharmaceutical; reacting said radioisotope and said at least one reagent to produce said preselected radiopharmaceutical in a raw state radiopharmaceutical solution containing undesirable chemical entities; conveying said raw state radiopharmaceutical solution through at least one cleansing step wherein at least one undesirable chemical entity is removed from said radiopharmaceutical solution, whereby said radiopharmaceutical solution is clarified; conveying a portion of said clarified radiopharmaceutical solution to a radiopharmaceutical solution pumping mechanism; pumping said clarified radiopharmaceutical solution to an injection valve, said injection valve to direct the flow of said clarified radiopharmaceutical solution; directing a first aliquot of the clarified radiopharmaceutical solution into a first sample collection vessel, said first sample collection vessel to hold the first aliquot of the clarified radiopharmaceutical solution for measurement of the radioactivity of the clarified radiopharmaceutical solution; directing a second aliquot of the clarified radiopharmaceutical solution into a second sample collection vessel, said second sample collection vessel to hold the second aliquot of the sample radiopharmaceutical solution for endotoxicity testing; directing a third aliquot of the clarified radiopharmaceutical solution into a high performance liquid chromatography column, said high performance liquid chromatography column to separate molecularly distinct species within the third aliquot of the clarified radiopharmaceutical solution into a number of separated molecularly distinct species; measuring the optical qualities of the third aliquot of the sample radiopharmaceutical solution by means of an ultraviolet-light detector; using a refractive index detector to measure the amount of each separated molecularly distinct species from said high performance liquid chromatography column; and measuring the radioactivity of each separated molecularly distinct species from said high performance liquid chromatography column.

According to the invention the measurement of the radioactivity of each separated molecularly distinct species from said high performance liquid chromatography column is performed by means of a radiation detector, said radiation detector including at least two radiation probes, said at least two radiation probes including: a first radiation probe to measure the radioactivity of the first aliquot of the sample radiopharmaceutical solution held in said first sample collection vessel; and a second radiation probe to measure the radioactivity of each separated molecularly distinct species from said high performance liquid chromatography column. Further, some embodiments of the method described above include a step of measuring the pH of the clarified radiopharmaceutical solution.

In some embodiments of the present general inventive concept, the radioisotope is selected from the group consisting of carbon-11, nitrogen-13, oxygen-15, and fluorine-18. In some embodiments, the radiopharmaceutical is [¹⁸F]-2-fluoro-2-deoxy-D-glucose (hereinafter [¹⁸F]FDG).

The automated nature of an HPLC-based quality control system according to the present general inventive concept allows for quality control tests to be conducted quickly and with minimal impact on user workflow; the automated system relieves a technician from having to perform a number of the quality control tests. When used as part of an integrated PET biomarker radiopharmaceutical production system as described herein, the present general inventive concept permits a radiopharmaceutical manufacturer to produce product and conduct quality control tests on the product with lower per dose costs.

### BRIEF DESCRIPTION OF THE SEVERAL VIEWS OF THE DRAWINGS

The above-mentioned features of the invention will become more clearly understood from the hollowing detailed description of the invention read together with the drawings in which:
Figure 1 is an schematic illustration of one example embodiment of the present general inventive concept, showing an overview of a PET biomarker production system, including the accelerator, the chemical production module (CPM), the dose synthesis module (DSM), and the quality control module (QCM);
Figure 2 is a flow diagram illustration of an example embodiment of a DSM according to the present general inventive concept;
Figure 3 is a schematic illustration of one example embodiment of the dose synthesis card and the sample card;
Figure 4 is a flow diagram illustration of an example embodiment of an HPLC-based QCM according to the present general inventive concept, showing among other items an injection valve for an HPLC-based QCM, showing the injection valve in a first state; and
Figure 5 is a second flow diagram illustration of the example embodiment of an HPLC-based QCM shown in Figure 4, showing the injection valve in a second state.

### DETAILED DESCRIPTION OF THE INVENTION

A chemical production module, dose synthesis module, and HPLC-based quality control module for a PET biomarker radiopharmaceutical production system are described more fully hereinafter. This invention may, however, be embodied in many different forms and should not be construed as limited to the embodiments set forth herein. Rather, these embodiments are provided to ensure that this disclosure is thorough and complete, and to ensure that it fully conveys the scope of the invention to those skilled in the art.

Thus, in some embodiments of an HPLC-based quality control testing system according to the present general inventive concept, the system comprises an injection valve to direct the flow of a sample radiopharmaceutical solution within the system; a sample radiopharmaceutical solution syringe-pump to direct the sample radiopharmaceutical solution to said injection valve; a high performance liquid chromatography pump to direct a mobile phase solvent to said injection valve; a pH detector to measure the pH of the sample radiopharmaceutical solution; a first sample collection vessel to receive a first aliquot of the sample radiopharmaceutical solution from said injection valve, said first sample collection vessel to hold the first aliquot of the sample radiopharmaceutical solution for measurement of the radioactivity of the sample radiopharmaceutical solution; a second sample collection vessel to receive a second aliquot of the sample radiopharmaceutical solution from said injection valve, said second sample collection vessel to hold the second aliquot of the sample radiopharmaceutical solution for endotoxicity testing; an endotoxin detector to perform endotoxicity testing on the second aliquot of the sample radiopharmaceutical solution held in said second sample collection vessel (in some embodiments, this endotoxin detector includes a kinetic hemocyte lysate-based assay); a fixed-volume fluid loop in fluid communication with said injection valve, said fixed-volume fluid loop to receive a third aliquot of the sample radiopharmaceutical solution from said injection valve; a high performance liquid chromatography column to receive the third aliquot of the sample radiopharmaceutical solution, said high performance liquid chromatography column to separate molecularly distinct species within the third aliquot of the sample radiopharmaceutical solution into a number of separated molecularly distinct species; a refractive index detector to measure the amount of each separated molecularly distinct species from said high performance liquid chromatography column; an ultraviolet-light detector to measure the optical qualities of the third aliquot of the sample radiopharmaceutical solution; and a radiation detector, said radiation detector including at least two radiation probes, said at least two radiation probes including: a first radiation probe to measure the radioactivity of the first aliquot of the sample radiopharmaceutical solution held in said first sample collection vessel; and a second radiation probe to measure the radioactivity of each separated molecularly distinct species from said high performance liquid chromatography column. Further, in some embodiments, the ultraviolet-light detector measures the optical qualities of the third aliquot of the sample radiopharmaceutical solution before the third aliquot of the sample radiopharmaceutical solution enters said high performance liquid chromatography column.

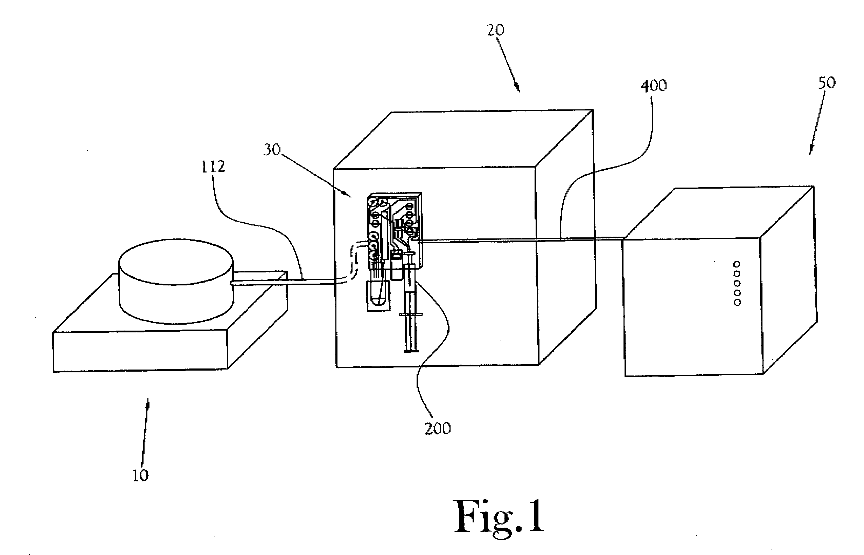

In some of the example embodiments described below, a chemical production module, dose synthesis module, and HPLC-based quality control module operate in conjunction with a complete PET biomarker production system. In one example embodiment of the present general inventive concept, illustrated in Figure 1, a PET biomarker production system comprises an accelerator **10,** which produces the radioisotopes; a chemical production module (or CPM) **20;** a dose synthesis module (or DSM) **30;** and an HPLC-based quality control module (or QCM) **50.** Once the accelerator **10** has produced a radioisotope, the radioisotope travels via a radioisotope delivery tube **112** to the DSM **30** attached to the CPM **20.** The CPM **20** holds reagents and solvents that are required during the radiopharmaceutical synthesis process. In the DSM **30,** the radiopharmaceutical solution is synthesized from the radioisotope and then purified for testing and administration. Following synthesis and purification, a portion (the "sample portion") of the resultant radiopharmaceutical solution is transported by way of a quality-control transfer line **400** to the QCM **50,** and another portion flows into a dose vessel **200.** Within the QCM **50,** a number of diagnostic instruments perform automated quality control tests on the sample portion.

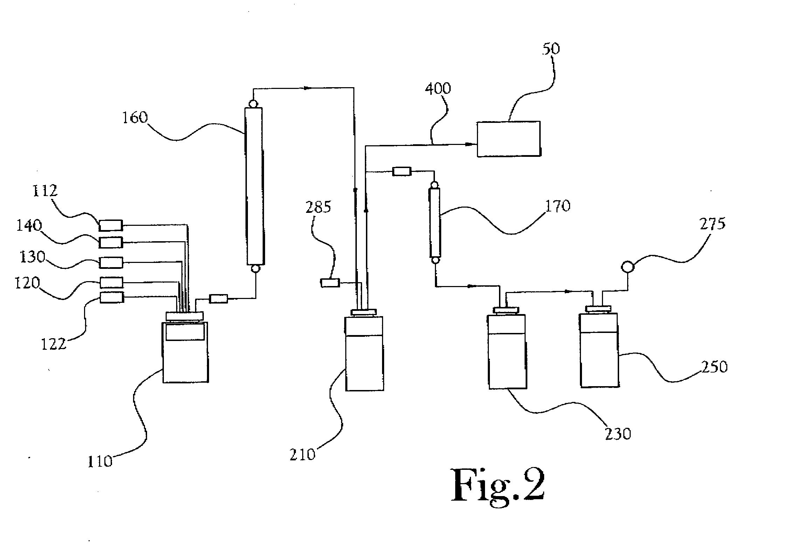

Figure 2 shows a flow diagram of one example embodiment of a dose synthesis module according to the present general inventive concept. In this embodiment, the radioisotope involved is flourine-18 (F-18), produced from the bombardment in a cyclotron of heavy water containing the oxygen-18 isotope. However, the present general inventive concept also embraces radiopharmaceutical synthesis systems generating and using other radioisotopes, including carbon-11, nitrogen-13, and oxygen-15.

As shown in Figure 2, the radioisotope enters a reaction chamber or reaction vessel 110 from the radioisotope delivery tube **112.** At this stage, the radioisotope F-18 is still mixed with quantities of heavy water from the biomarker generator. A number of other reagents and substances are introduced into the reaction vessel **110** by way of several inputs, including, in some embodiments, some or all of the following: a first organic reagent input **120,** a second organic reagent input **122,** an aqueous input **130,** and a gas input. In some embodiments, after the radioisotope enters the reaction vessel **110** from the radioisotope delivery tube **112**, a first organic ingredient is introduced to the reaction vessel **110** from the first organic reagent input **120.** In some embodiments, the first organic ingredient includes a solution of potassium complexed to 1,10-diaza-4,7,13,16,21,14-hexaoxabicyclo[8.8.8]hexacosane (commonly called Kryptofix **222**^{™}, hereinafter "Kryptofix") or a similar crown ether. In many embodiments, the potassium-kryptofix complex or similar organometallic complex is carried by acetonitrile as solvent. The potassium activates the F-18 fluoride radioisotope, while the kryptofix binds the potassium atoms and inhibits the formation of a potassium-fluoride complex. Next, the gas input **140** fills the reaction vessel **110** with an inert gas such as dry nitrogen. Then, the mixture in the reaction vessel **110** is heated by to remove residual heavy water by evaporating the azeotropic water/acetonitrile mixture. In some embodiments, a vacuum helps to remove the vaporized water. Next, the second organic input **122** adds a second organic ingredient to the mixture in the reaction vessel **110**. In many embodiments, the second organic ingredient is mannose triflate in dry acetonitrile. The solution is then heated at approximately 110 degrees Celsius for approximately two minutes. By this stage, the F-18 has bonded to the mannose to form the immediate precursor for [¹⁸F]FDG, commonly 18F-fluorodeoxyglucose tetraacetate (FTAG). Next, aqueous acid-in many embodiments, aqueous hydrochloric acid-is introduced through the aqueous input **130.** The hydrochloric acid removes the protective acetyl groups on the ¹⁸F-FTAG, leaving ¹⁸F-fludeoxyglucose (i.e. [¹⁸F]FDG) in what may now be called the synthesized, pre-purified radiopharmaceutical solution.

The [¹⁸F]FDG having been synthesized, it must be purified before testing and administration. The [¹⁸F]FDG in solution passes from the reaction vessel **110** through a solid phase extraction column **160.** In some embodiments of the present invention, the solid phase extraction column **160** comprises a length filled with an ion exchange resin, a length filled with alumina, and a length filled with carbon-18.

Once the now-purified radiopharmaceutical solution has exited the solid phase extraction column **160,** the radiopharmaceutical solution is collected in a product collection vial **210.** In many embodiments, the product collection vial **210** includes a vent **285** to allow air or gas to escape the product collection vial **210** as the product collection vial **210** fills with radiopharmaceutical solution. The production collection vial **210** collects all of the purified radiopharmaceutical solution as a single bolus before portions of the purified radiopharmaceutical solution are distributed to other destinations as described infra. From the product collection vial **210,** a first portion of the purified radiopharmaceutical solution is directed through a quality-control transfer line **400** to a QCM **50.** From the product collection vial **210,** a second portion of the purified radiopharmaceutical solution is directed through a sterile filter **170** and through a first post-sterile-filter pathway **262** into a sterility sample vial **230**. A first part of the second portion of the purified radiopharmaceutical solution in the sterility sample vial **230** remains in the sterility sample vial **220**, and a second part of the second portion of the purified radiopharmaceutical solution in the sterility sample vial **230** travels by way of a second post-sterile-filter pathway **264** into a product injection vial **250.** The second part of the second portion of the purified radiopharmaceutical solution collected in the product injection vial **250** is generally the radiopharmaceutical solution that will be administered to one or more patients. In many embodiments, second part of the second portion of the purified radiopharmaceutical solution collected in the product injection vial **250** constitutes a majority of the radiopharmaceutical solution produced in the synthesis process.

As described, a second portion of the purified radiopharmaceutical solution is directed through a sterile filter **170** before passing through a first post-sterile-filter pathway **262** into a sterility sample vial **230.** In some embodiments, the integrity of the filter **170** is tested by passing inert gas through the filter **170** at increasing pressure. A pressure sensor measures the pressure of the inert gas upon the filter **170** and detects whether the filter **170** is still intact. In some embodiments, the filter **170** is expected in to be capable of maintaining integrity under pressures of at least 50 pounds per square inch (psi).

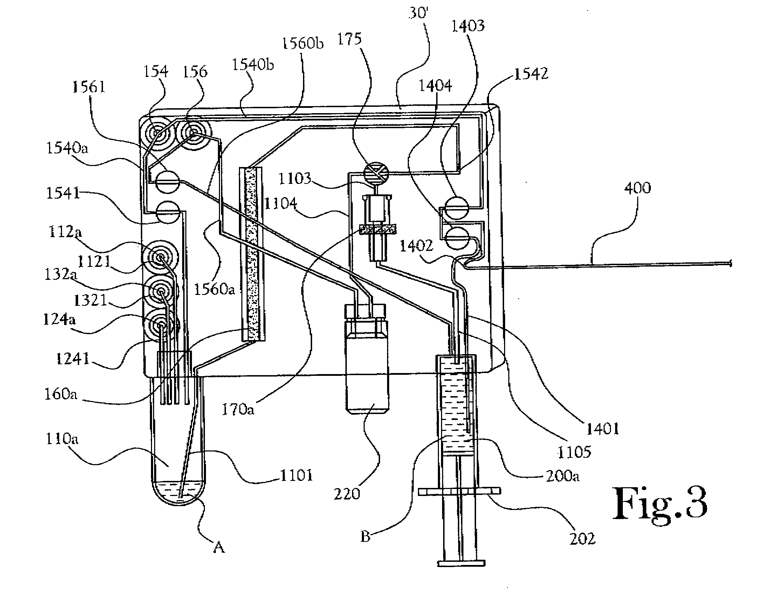

Figure 3 displays a schematic view of one example embodiment of a dose synthesis module (DSM) **30**'. The DSM **30**' includes a reaction vessel **110a** where the radiopharmaceutical solution is synthesized. A radioisotope input **112a** introduces the radioisotope F-18 into the reaction vessel **110a** through a radioisotope input channel **1121.** At this stage, the radioisotope is still mixed with quantities of heavy water from the biomarker generator. Next, an organic input **124a** introduces a solution of potassium-kryptofix complex in acetonitrile into the reaction vessel **110a** through an organic input channel **1241.** A combination nitrogen-input and vacuum **154** pumps nitrogen gas into the reaction vessel **110a** through a gas channel **1540a** and a valve **1541,** which valve is at that time in an open position. The mixture A in the reaction vessel **110a** is heated in nitrogen atmosphere to azeotropically remove water from the mixture A, the vaporized water being evacuated through the gas channel **1540a** and the vacuum **154.** Next, the organic input **124a** introduces mannose triflate in dry acetonitrile into the reaction vessel **110a** through the organic input channel **1241.** The solution is heated at approximately 110 degrees Celsius for approximately two minutes. By this stage, the F-18 has bonded to the mannose to form the immediate precursor for [¹⁸F]FDG, FTAG. Next, aqueous hydrochloric acid is introduced into the reaction vessel **110a** through an aqueous input **132a** and an aqueous channel **1321.** The hydrochloric acid removes the protective acetyl groups on the intermediate ¹⁸F-FTAG, leaving ¹⁸F-fludeoxyglucose (i.e. [¹⁸F]FDG).

Having been synthesized, the [¹⁸F]FDG in solution passes from the reaction vessel **110a** through a post-reaction channel **1101** into a solid phase extraction column **160a**, where some undesirable substances are removed from the solution, thereby clarifying the radiopharmaceutical solution. In some embodiments of the present invention, the solid phase extraction (SPE) column **160a** comprises a length with an ion exchange resin, a length filled with alumina, and a length filled with carbon-18. The radiopharmaceutical passes through the SPE column **160a** with a mobile phase that in many embodiments includes acetonitrile from the organic input **124a.** As some of the mobile phase and impurities emerge from the SPE column **160a,** they pass through a second post-reaction channel **1542** and through a three-way valve **175** and waste channel **1104** into a waste receptacle **210.** As the clarified radiopharmaceutical solution emerges from the SPE column **160a,** the radiopharmaceutical solution next passes through the second post-reaction channel **1542** and through the three-way valve **175** into a filter channel **1103** and then through a filter **170a.** The filter **170a** removes other impurities (including particulate impurities), thereby further clarifying the radiopharmaceutical solution. In some embodiments the filter **170a** includes a Millipore filter with pores approximately 0.22 micrometers in diameter.

Once the radiopharmaceutical solution has passed through the filter **170a,** the clarified radiopharmaceutical solution travels via the post-clarification channel **1105** into the sterile dose administration vessel **200a**, which in the illustrated embodiment is incorporated into a syringe **202.** In some embodiments, the dose administration vessel is filled beforehand with a mixture of phosphate buffer and saline. As the clarified radiopharmaceutical solution fills the sterile dose administration vessel **200a,** a sample portion of the solution **B** is diverted through an extraction channel **1401** to the quality-control transfer line **400.**

After the sample portion of the solution passes into the quality-control transfer line **400,** any excess solution remaining in the dose administration vessel **200a** is extracted by a vent **156** through a first venting channel **1560b** and thence conveyed through an open valve **1561** and through a second venting channel **1560a** into the waste receptacle **210.** The vacuum **154** evacuates residual solution from the transfer channel **1402** through a now-open valve **1403** and a solution evacuation channel **1540b**.

In some embodiments of the present invention, the CPM **20** holds sufficient amounts of reagents and solvents that are required during the radiopharmaceutical synthesis process to carry out multiple runs without reloading. Indeed, in some embodiments the CPM **20** is loaded with reagents and solvents approximately once per month, with that month's supply of reagents and solvents sufficient to produce several dozen or even several hundred doses of radiopharmaceutical. As the reagents and solvents are stored in the CPM **20,** it is easier than under previous systems to keep the reagents and solvents sterile and uncontaminated. In some embodiments, a sterile environment is supported and contamination inhibited by discarding each DSM **30** after one run, and thus in these embodiments the DSM **30** is adapted to be disposable.

Thus, each batch of reagents and solvents, loaded periodically into the CPM **20,** will supply a batch of multiple doses of radiopharmaceutical, each dose produced in a separate run. Some quality control tests are performed for every dose that is produced, while other quality control tests are performed for every batch of doses. For example, in one embodiment of the present invention, the filter integrity test, the color and clarity test, the acidity test, the volatile organics test, the chemical purity test, and the radiochemical purity test are performed for every dose. On the other hand, some quality control tests need be performed only once or twice per batch, such as the radionuclide purity test (using a radiation probe to measure the half-life of the F-18 in the [¹⁸F]FDG), the bacterial endotoxin test, and the sterility test. These tests are performed generally on the first and last doses of each batch. Because these per-batch quality control tests are conducted less frequently, they may not be included in the QCM, but rather may be conducted by technicians using separate laboratory equipment.

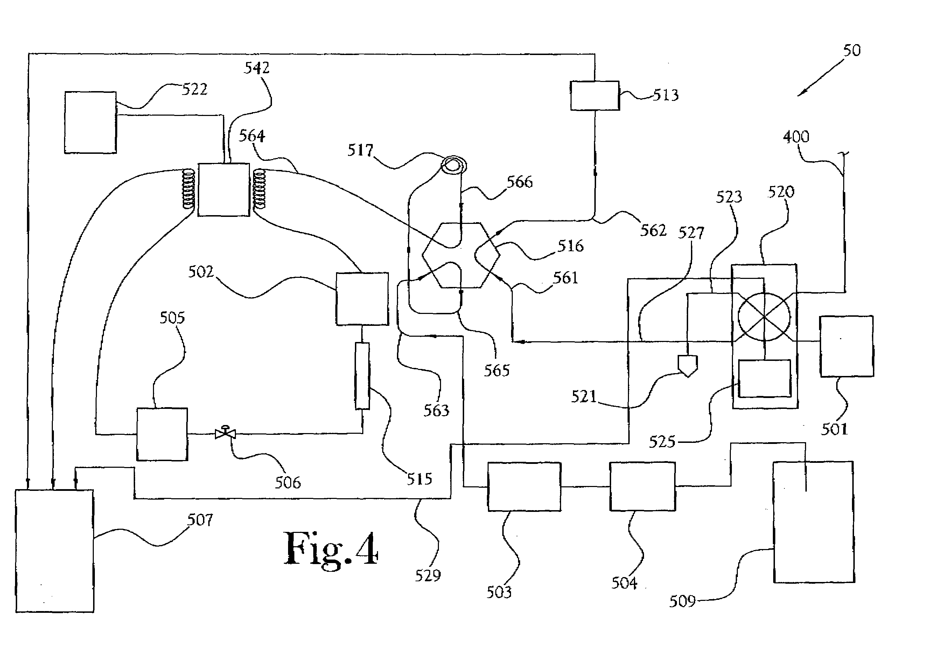

Figure 4 shows a flow chart illustrating one example embodiment of an HPLC-based QCM **50** according to the present general inventive concept. The example embodiment of an HPLC-based QCM **50** illustrated in Figure 4 is to test a first portion of purified radiopharmaceutical solution (hereinafter "the sample radiopharmaceutical solution" or simply "sample") from a DSM. As shown in Figure 4, in some embodiments an HPLC-based QCM **50** according to the present general inventive concept includes an HPLC pump **503,** which draws mobile phase solvent from a mobile phase solvent reservoir **509** and through a degasser **504;** a syringe-pump assembly **520** to load into the HPLC-based QCM **50** the sample radiopharmaceutical solution from a quality-control transfer line **400**; an HPLC column **515**; an injection valve **516**; and fixed volume fluid loop **517.** In some embodiments, including the example embodiment illustrated in Figure 4, the HPLC-based QCM **50** according to the present general inventive concept includes a radiation detector **522** with one or more radiation probes; in the illustrated example embodiment shown in Figure 4, the radiation detector **522** includes two radiation probes, **542a** and **542b.** Further, in some embodiments, the HPLC-based QCM **50** includes an UV/VIS detector **502** to test the optical qualities of the sample. In some embodiments, the HPLC-based QCM **50** includes an RI detector **505** to test the radionuclidic identity of the sample.

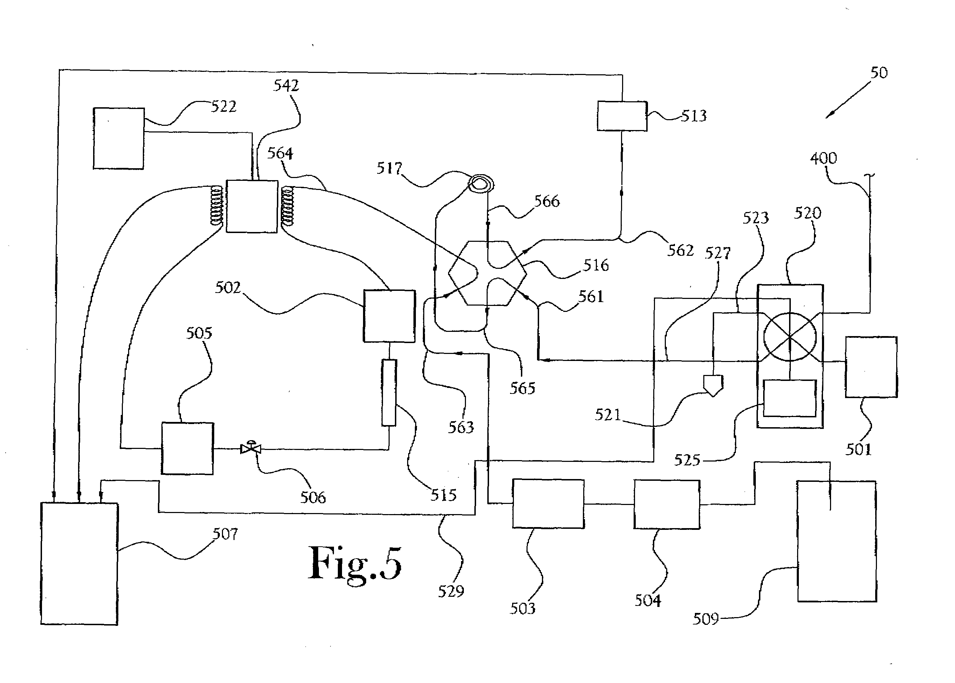

In the normal operation of one example embodiment of the present general inventive concept, as illustrated in Figures 4 and 5, a sample radiopharmaceutical solution enters the syringe-pump assembly **520** from the quality-control transfer line **400.** Within the syringe-pump assembly **520,** the sample radiopharmaceutical solution is stored within a syringe **525.** Then, a portion of the sample radiopharmaceutical solution is propelled by the syringe **525** or a similar mechanism and thereby is loaded, in a steady, even, and substantially reproducible manner, into a first QCM pathway **527.** In some embodiments, the syringe-pump assembly **520** draws water or other solvent, such as LAL reagent water, from a reagent water reservoir **501**. The sample radiopharmaceutical solution moves through the first QCM pathway **527** and passes through a first injection valve line **561** to enter the injection valve **516**. Another portion of the sample radiopharmaceutical solution within the syringe **525** is directed within the syringe-pump assembly **520** to enter a second QCM pathway **523;** this second portion of the sample radiopharmaceutical solution passes through the second QCM pathway **523** into an endotoxin testing sample vessel **521**. Any remainder third portion of the sample radiopharmaceutical solution within the syringe **525** is directed within the syringe-pump assembly **520** to enter a third QCM pathway **529**, which conveys the remainder third portion of the sample radiopharmaceutical solution to a waste vessel **507**.

(In some embodiments, in the normal course of conducting quality control tests on the sample radiopharmaceutical solution, an aliquot of the sample radiopharmaceutical solution is tested for endotoxicity. In some embodiments, sample aliquot collected in the test vial **521** is tested for endotoxicity by diluting the sample aliquot and subjecting the diluted sample aliquot to an endotoxicity test. In some embodiments, the endotoxicity test is conducted by an automated endotoxin detector. In some embodiments, the endotoxicity test is conducted by an automated endotoxin spectrophotometer. In some embodiments, the endotoxicity test comprises the use of a kinetic hemocyte lysate-based assay for the detection and quantification of microbial contaminants. In some embodiments, other forms of endotoxicity tests are used.)

As illustrated in Figures 4 and 5, there are six fluid-carrying lines that lead into or out of the injection valve: the first injection valve line **561**, the second infection valve line **562,** the third injection valve line **563,** the fourth injection valve line **564,** the fifth injection valve line 565, the sixth injection valve line **566**.

The first injection valve line **561** conveys the sample radiopharmaceutical solution from the syringe-pump assembly **520** into the injection valve **516.**

The second injection valve line **562** conveys solution from the injection valve **516** to a pH detector **513**. In some embodiments, the pH detector **513** includes a solid state detector. In some embodiments, the pH detector **513** includes an in-line solid state pH detector. After the solution passes through the pH detector **513,** the solution is directed to the waste vessel **507.**

The third injection valve line **563** conveys to the injection valve **516** mobile phase solvent drawn by the HPLC pump **503** from the mobile phase solvent reservoir **509** through the degasser **504.** The fourth injection valve line **564** conveys fluid from the injection valve **516** to the HPLC column **515.**

The fifth injection valve line **565** conveys fluid from the injection valve **516** into the fixed-volume fluid loop **517,** and the sixth valve line **565** conveys fluid from the fixed-volume fluid loop **517** into the injection valve **516.** Thus, three of the injection valve lines **561, 563**, and **565** are input lines, and three of the injection valve lines **562, 564,** and **566** are output lines.

In various embodiments, the injection valve **516** directs incoming fluid (generally the sample radiopharmaceutical solution or the mobile phase solvent) from an input line to an output line. Figures 4 and 5 show the injection valve **516** in two different states. In the first state (also called State A), shown in Figure 4, the injection valve **516** is positioned such that a channel within the injection valve **516** directs fluid from the first injection valve line **561** to the second injection valve line **562;** that is, in State A, sample radiopharmaceutical solution passes from the first QCM pathway **527,** through the first injection valve line **561,** through the injection valve **516**, and then through the second injection valve line **562** to the pH detector **513.** In State A, mobile phase solvent from the HPLC pump **503** passes through the third injection valve line **563** into the injection valve **516**. Within the injection valve **516**, mobile phase solvent from the third injection valve line **563** is directed into the fifth injection valve line **565** and then into the fixed-volume fluid loop **517.** The mobile phase solvent within the fixed-volume fluid loop **517** continues through the sixth injection valve line **566** back into the injection valve **516**, where the mobile phase solvent is directed into the fourth injection valve line **564** and thereafter conveyed to the HPLC column **515.**

During the quality control testing process, at a point where sample radiopharmaceutical solution is flowing from the syringe-pump assembly **520** through the pH detector **501** and through the first injection valve line **561**, the injection valve **516** is rotated 60 degrees into the second state (or State B), shown in Figure 5. In State B, the sample radiopharmaceutical solution passes from the first injection valve line **561,** through the injection valve **516,** and then into the fifth injection valve line **565;** from the fifth injection valve line **565,** the sample radiopharmaceutical solution enters the fixed-volume fluid loop **517.** As fluid continues to flow while the injection valve **516** is in State B, sample radiopharmaceutical solution flowing through the fixed-volume fluid loop **517** exits the fixed-volume fluid loop **517** and re-enters the injection valve **516** through the sixth injection valve line **566;** the sample radiopharmaceutical solution is then directed into the second injection valve line **562,** and the sample radiopharmaceutical solution passes through the second injection valve line **562** to the pH detector **513** and the waste vessel **507.**

While sample radiopharmaceutical solution is flowing through the fixed-volume fluid loop **517,** the injection valve **516** is rotated a second time, so that the injection valve is again in State A (as in Figure 4). At this point in time, mobile phase solvent from the HPLC pump **503** passes through the third injection valve line **563** and into the injection valve **516;** within the injection valve **516,** the mobile phase solvent from the third injection valve line **563** is directed into the fifth injection valve line **565.** The mobile phase solvent within the fifth injection valve line **565** enters the fixed-volume fluid loop **517,** pushing the sample radiopharmaceutical solution within the fixed-volume fluid loop **517** out of the fixed-volume fluid loop **517** and through the sixth injection valve line **566** into the injection valve **516**. Within the injection valve **516,** the sample radiopharmaceutical solution from the fixed-volume fluid loop **517** is directed into the fourth injection valve line **564.** (In some embodiments, the fixed-volume loop **517** has a volume of approximately 20 microliters. However, those of skill in the art will recognize that other volumes the fixed-volume loop **517** are possible and are contemplated by the present invention.)

Conveyed along the fourth injection valve line **564,** the sample radiopharmaceutical solution from the fixed-volume fluid loop **517** passes by a radiation probe 542, which is part of or connected to a radiation detector **522.** Next, the sample radiopharmaceutical solution passes by or through a UV/VIS detector **502** to test the optical clarity of the sample radiopharmaceutical solution. In some embodiments, the UV/VIS detector **502** comprises a ultra-violet and visible light spectrometer. In some embodiments, the UV/VIS detector **502** comprises a UV spectrophotometer. In some embodiments, the UV/VIS detector **502** comprises a UV spectrophotometer with a deuterium light source. In some embodiments, the UV/VIS detector **502** comprises a UV spectrophotometer with a tungsten-halogen light source. In some embodiments, the UV/VIS detector **502** comprises a UV spectrophotometer like the Smartline UV Detector 2500, manufactured by KNAUER. In some embodiments, the HPLC-based QCM **50** includes a detector comprises a spectrophotometer that detects a range of the electromagnetic spectrum that includes infrared light. In some embodiments, the HPLC-based QCM **50** includes multiple detectors, including, in some embodiments, multiple UV/VIS detectors or, in some embodiments, multiple spectrophotometers or spectrometers.

In some embodiments, the UV/VIS detector **502** tests the sample radiopharmaceutical solution for the presence of residual Krypotofix. Generally, a purified radiopharmaceutical solution will be considered to pass quality control testing for Kryptofix if the residual concentration of Kryptofix in the final product is less than or equal to 50 micrograms per milliliter solution.

In some embodiments, the radiopharmaceutical solution from the fixed-volume fluid loop **517** passes by or through the UV/VIS detector **502** before entering the HPLC column **515,** as shown in Figure 4. In In some embodiments, the radiopharmaceutical solution from the fixed-volume fluid loop **517** passes by or through a UV/VIS detector after entering and passing though the HPLC column **515.**

In the illustrated example embodiment shown in Figure 4, after passing by or through the UV/VIS detector **502,** the sample radiopharmaceutical solution passes into the HPLC column **515.** The HPLC column **515** separates [¹⁸F]FDG within the sample radiopharmaceutical solution from any other radioactive products or other organic impurities. In this way, the HPLC column **515** assists testing the radiochemical identity of the sample radiopharmaceutical solution that is, the HPLC column **515** helps to identify the ratio of [¹⁸F]FDG (or other desired radiopharmaceutical compound) to other radioactive products (such as free F-18 ion and [¹⁸F]FTAG). The HPLC column **515** separates the [¹⁸F]FDG from other compounds based on their different retention time, making possible the identification of the [¹⁸F]FDG based on retention time and allowing other instruments to analyze the [¹⁸F]FDG separately from other compounds. Thus, in some embodiments, after exiting the HPLC column **515,** the sample radiopharmaceutical solution passes through a refractive index detector (RI detector) **505.** The RI detector 505 detects, measures and quantifies the presence of compounds as they are eluted from the HPLC column **515.** [¹⁸F]FDG is identified based on its retention time, as are other compounds present in the sample radiopharmaceutical solution. In general, [¹⁸F]FDG has a slightly shorter retention time compared to FDG that lacks a radioisotope. In some embodiments, the radiochemical purity of the separated [¹⁸F]FDG within the sample radiopharmaceutical solution is also measured after the elution of the separated [¹⁸F]FDG within the sample radiopharmaceutical solution from the HPLC column **515.**

In many embodiments, the RI detector **505** also measures the residual concentration in the sample radiopharmaceutical solution of solvents such as acetonitrile and ethanol. Generally, a purified radiopharmaceutical solution will be considered to pass quality control testing if the residual concentration of acetonitrile in the sample radiopharmaceutical solution is less than or equal to 400 ppm.

In some embodiments, an HPLC-based QCM **50** according to the present general inventive concept includes a radiation detector **522** with at least one radiation probe **542.** As shown in Figures 4 and 5, the radiation probe **542** measures the radioactivity of the separated [¹⁸F]FDG within the sample radiopharmaceutical solution eluted from the HPLC column **515**. The radiation probe **542** also measures the radioactivity of other radioactive products (such as free F-18 ion and [¹⁸F]FTAG) eluted from the HPLC column **515**.

Generally, after the sample radiopharmaceutical solution is eluted from the HPLC column **515** and tested for radiochemical identity, radiochemical purity, and the presence of residual impurities, the sample radiopharmaceutical solution is conveyed to the waste vessel **507.** In some embodiments, HPLC-based QCM **50** according to the present general inventive concept also includes, on the line carrying the sample radiopharmaceutical solution from the HPLC column **515** to the waste vessel **507,** a backpressure valve **506.**

The present general inventive concept comprises an HPLC-based quality control system for conducting a number of automated tests on a radiopharmaceutical solution, and in particular on a synthesized and purified radiopharmaceutical solution for use in positron emission tomography. An HPLC-based quality control system according to the present general inventive concept provides a quality control testing system that makes efficient use of sample volume. The present general inventive concept is compatible with and able to test a variety of radioisotopes and radiopharmaceutical compounds. Further, the automated nature of an HPLC-based quality control system according to the present general inventive concept allows for quality control tests to be conducted quickly and with minimal impact on user workflow; the automated system relieves a technician from having to perform a number of the quality control tests. Overall, and especially when used as part of an integrated PET biomarker radiopharmaceutical production system as described above, the present general inventive concept permits a radiopharmaceutical manufacturer to produce product and conduct quality control tests on the product with lower per dose costs.

While the present invention has been illustrated by description of one embodiment, and while the illustrative embodiment has been described in detail, it is not the intention of the applicant to restrict or in any way limit the scope of the appended claims to such detail. Additional modifications will readily appear to those skilled in the art. The invention in its broader aspects is therefore not limited to the specific details, representative apparatus and methods, and illustrative examples shown and described. Accordingly, departures may be made from such details without departing from scope of applicant's general inventive concept.

## Claims

1. An automated high-performance-liquid-chromatography-based quality control testing system to test a sample radiopharmaceutical solution, the system comprising:
an injection valve (516) to receive a sample radiopharmaceutical solution and a mobile phase solvent and to direct the flow of the sample radiopharmaceutical solution and the mobile phase solvent within the system, said injection valve (516) being in fluid communication with a fluid line (564);
a syringe-pump (520) to direct the sample radiopharmaceutical solution to said injection valve (516), said syringe-pump (520) being in fluid communication with said injection valve (516);
a high performance liquid chromatography pump (503) to direct the mobile phase solvent to said injection valve (516), said high performance liquid chromatography pump (503) being in fluid communication with said injection valve (516);
a high performance liquid chromatography column (515) in communication with said fluid line (564), said high performance liquid chromatography column (515) to receive the sample radiopharmaceutical solution from said fluid line (564), said high performance liquid chromatography column (515) to separate molecularly distinct species within the sample radiopharmaceutical solution into a number of separated molecularly distinct species;
a radiation detector (542) to measure the radioactivity of the sample radiopharmaceutical solution within said fluid line (564) before said sample radiopharmaceutical solution enters said high performance liquid chromatography column (515) and to measure the radioactivity of each separated molecularly distinct species after each separated molecularly distinct species emerges from said high performance liquid chromatography column (515);
**characterized in that**
said system comprises an ultraviolet-light and visible light detector (502) in communication with said fluid line (564), said ultraviolet-light and visible light detector (502) to measure the optical qualities of the sample radiopharmaceutical solution as the radiopharmaceutical solution travels through said fluid line (564); and
a refractive index detector (505) to measure the amount of each separated molecularly distinct species as each separated molecularly distinct species emerges from said high performance liquid chromatography column (515).

2. An automated method for conducting quality control tests in real time on a radiopharmaceutical solution comprising:
directing the radiopharmaceutical solution into an injection valve (516) to direct the flow of the sample radiopharmaceutical solution within an automated quality control testing system, said injection valve (516) being in fluid communication with a fluid line (564);
directing the radiopharmaceutical solution from the injection valve (516) into the fluid line (564);
as the radiopharmaceutical solution travels through said fluid line (564), measuring the optical qualities of the radiopharmaceutical solution using an ultraviolet-light and visible light detector (502);
as the radiopharmaceutical solution travels through said fluid line (564), measuring the radioactivity of the sample radiopharmaceutical solution within said fluid line (564) using a radiation detector (542);
passing the radiopharmaceutical solution from said fluid line (564) into a high performance liquid chromatography column (515), said high performance liquid chromatography column (515) to separate molecularly distinct species within the sample radiopharmaceutical solution into a number of separated molecularly distinct species;
wherein said method is **characterized by** using a refractive index detector (505) to measure the amount of each separated molecularly distinct species as each separated molecularly distinct species emerges from said high performance liquid chromatography column (515); and
using said radiation detector (542) to measure the radioactivity of each separated molecularly distinct species after each separated molecularly distinct species emerges from said high performance liquid chromatography column (515).

3. The automated method of claim 2 further comprising measuring the pH of the radiopharmaceutical solution.

4. The method of at least one of the claims 2 or 3 wherein the radiopharmaceutical solution includes a radioisotope selected from the group consisting of carbon-11, nitrogen-13, oxygen-15, and fluorine-18.

5. The method of at least one of the claims 2 to 4 wherein said radiopharmaceutical solution includes [¹⁸F]-2-fluoro-2-deoxy-D-glucose.

## Patentansprüche

1. Automatisiertes Testsystem für die Qualitätskontrolle auf Basis einer Hochleistungsflüssigkeitschromatographie zum Testen einer radiopharmazeutischen Probelösung, wobei das System umfasst:
ein Einspritzventil (516) zur Aufnahme einer radiopharmazeutischen Probelösung und eines Lösungsmittels als mobiler Phase und zum Leiten des Flusses der radiopharmazeutischen Probelösung und des Lösungsmittels als mobiler Phase innerhalb des Systems, wobei das Einspritzventil (516) in Fluidverbindung mit einer Fluidleitung (564) steht;
eine Spritzenpumpe (520), um die radiopharmazeutische Probelösung zu dem Einspritzventil (516) zu leiten, wobei die Spritzenpumpe (520) mit dem Einspritzventil (516) in Fluidverbindung steht;
eine Hochleistungsflüssigkeitschromatographie-Pumpe (503), um das Lösungsmittel als mobile Phase zu dem Einspritzventil (516) zu leiten, wobei die Hochleistungsflüssigkeitschromatographie-Pumpe (503) mit dem Einspritzventil (516) in Fluidverbindung steht;
eine Hochleistungsflüssigkeitschromatographie-Säule (515) in Verbindung mit der Fluidleitung (564), wobei die Hochleistungsflüssigkeitschromatographie-Säule (515) die radiopharmazeutische Probelösung aus der Fluidleitung (564) aufnimmt und molekular unterschiedliche Spezies in der radiopharmazeutischen Probelösung in eine Anzahl voneinander getrennter, molekular unterschiedlicher Spezies auftrennt;
einen Strahlungsdetektor (542) zum Messen der Radioaktivität der radiopharmazeutischen Probelösung in der Fluidleitung (564), bevor die radiopharmazeutische Probelösung in die Hochleistungsflüssigkeitschromatographie-Säule (515) eintritt, und zum Messen der Radioaktivität jeder getrennten, molekular unterschiedlichen Spezies nach dem Austreten jeder getrennten, molekular unterschiedlichen Spezies aus der Hochleistungsflüssigkeitschromatographie-Säule (515);
**dadurch gekennzeichnet, dass**
das System einen Detektor (502) für UV-Licht und sichtbares Licht umfasst, der in Verbindung mit der Fluidleitung (564) steht, wobei der Detektor (502) für UV-Licht und sichtbares Licht die optischen Eigenschaften der radiopharmazeutischen Probelösung misst, während die radiopharmazeutische Lösung die Fluidleitung (564) durchläuft; und
einen Brechzahldetektor (505) zum Messen der Menge jeder getrennten, molekular unterschiedlichen Spezies beim Austreten jeder getrennten, molekular unterschiedlichen Spezies aus der Hochleistungsflüssigkeitschromatographie-Säule (515).

2. Automatisiertes Verfahren zur Durchführung von Qualitätskontrolltests in Echtzeit an einer radiopharmazeutischen Lösung, umfassend die Schritte:
Leiten der radiopharmazeutischen Lösung in ein Einspritzventil (516), um den Fluss der radiopharmazeutischen Probelösung innerhalb eines Testsystems zur automatisierten Qualitätskontrolle zu leiten, wobei das Einspritzventil (516) in Fluidverbindung mit einer Fluidleitung (564) steht;
Leiten der radiopharmazeutischen Lösung vom Einspritzventil (516) in die Fluidleitung (564);
Messen der optischen Eigenschaften der radiopharmazeutischen Lösung mit einem Detektor (502) für UV-Licht und sichtbares Licht, während die radiopharmazeutische Lösung durch die Fluidleitung (564) fließt;
Messen der Radioaktivität der radiopharmazeutischen Probelösung in der Fluidleitung (564) mit einem Strahlungsdetektor (542), während die radiopharmazeutische Probelösung durch die Fluidleitung (564) fließt;
Leiten der radiopharmazeutischen Lösung aus der Fluidleitung (564) in eine Hochleistungsflüssigkeitschromatographie-Säule (515), wobei die Hochleistungsflüssigkeitschromatographie-Säule (515) molekular unterschiedliche Spezien in der radiopharmazeutischen Probelösung in eine Anzahl voneinander getrennter, molekular unterschiedlicher Spezien auftrennt;
wobei das Verfahren **gekennzeichnet ist durch** die Verwendung eines Brechzahldetektors (505) zum Messen der Menge jeder getrennten, molekular unterschiedlichen Spezies beim Austreten jeder getrennten, molekular unterschiedlichen Spezies aus der Hochleistungsflüssigkeitschromatographie-Säule (515); und
die Verwendung des Strahlungsdetektors (542) zum Messen der Radioaktivität jeder getrennten, molekular unterschiedlichen Spezies nach dem Austreten jeder getrennten, molekular unterschiedlichen Spezies aus der Hochleistungsflüssigkeitschromatographie-Säule (515).

3. Automatisiertes Verfahren nach Anspruch 2, ferner umfassend das Messen des pH-Wertes der radiopharmazeutischen Lösung.

4. Verfahren nach mindestens einem der Ansprüche 2 oder 3, wobei die radiopharmazeutische Lösung ein Radioisotop umfasst, das aus der Gruppe Kohlenstoff-11, Stickstoff-13, Sauerstoff-15 und Fluor-18 ausgewählt ist.

5. Verfahren nach mindestens einem der Ansprüche 2 bis 4, wobei die radiopharmazeutische Lösung [¹⁸F]-2-Fluor-2-deoxy-D-glucose umfasst.

## Revendications

1. Un système automatisé de test de contrôle de qualité basé sur la chromatographie liquide haute performance pour tester un échantillon de solution radio-pharmaceutique, le système comprenant :
Une vanne d'injection (516) pour recevoir un échantillon de solution radio-pharmaceutique et un solvant à phase mobile et pour diriger le flux de l'échantillon de solution radio-pharmaceutique et le solvant à phase mobile dans le système, ladite vanne d'injection (516) étant en communication fluide avec une ligne de fluide (564) ;
Une pompe à seringue (520) pour diriger l'échantillon de solution radio-pharmaceutique vers ladite vanne d'injection (516), ladite pompe à seringue (520) étant en communication fluide avec ladite vanne d'injection (516) ;
Une pompe à chromatographie liquide haute performance (503) pour diriger le solvant à phase mobile vers ladite vanne d'injection (516), ladite pompe à chromatographie liquide haute performance (503) étant en communication fluide avec ladite vanne d'injection (516) ;
Une colonne à chromatographie liquide haute performance (515) en communication avec ladite ligne de fluide (564), ladite colonne à chromatographie liquide haute performance (515) devant recevoir l'échantillon de solution radio-pharmaceutique de ladite ligne de fluide (564), ladite colonne à chromatographie liquide haute performance (515) devant séparer les espèces moléculairement différentes de l'échantillon de solution radio-pharmaceutique en un nombre d'espèces séparées moléculairement différentes ;
Un détecteur de radiation (542) pour mesurer la radioactivité de l'échantillon de solution radio-pharmaceutique dans ladite ligne de fluide (564) avant que ledit échantillon de solution radio-pharmaceutique entre dans ladite colonne à chromatographie liquide haute performance (515) et pour mesurer la radioactivité de chaque espèce séparée moléculairement différente après que chaque espèce séparée moléculairement différente émerge de ladite colonne à chromatographie liquide haute performance (515) ;
**Caractérisé en ce que**
Ledit système comprend un détecteur de lumière ultraviolette et de lumière visible (502) en communication avec ladite ligne de fluide (564), ledit détecteur de lumière ultraviolette et de lumière visible (502) devant mesurer les qualités optiques de l'échantillon de solution radio-pharmaceutique lorsque l'échantillon de solution radio-pharmaceutique se déplace au travers de ladite ligne de fluide (564) ; et
Un détecteur à indice de réfraction (505) pour mesurer la quantité de chaque espèce séparée moléculairement différente car chaque espèce séparée moléculairement différente émerge de ladite colonne à chromatographie liquide haute performance (515).

2. Une méthode automatisée pour effectuer des tests de contrôle de qualité en temps réel sur un solution radio-pharmaceutique comprenant :
La direction de la solution radio-pharmaceutique dans une vanne d'injection (516) pour diriger le flux de l'échantillon de solution radio-pharmaceutique dans un système de test de contrôle de qualité automatisé, ladite vanne d'injection (516) étant en communication fluide avec une ligne de fluide (564) ;
La direction de la solution radio-pharmaceutique à partir de la vanne d'injection (516) dans la ligne de fluide (564) ;
Lorsque la solution radio-pharmaceutique se déplace au travers d'une ligne de fluide (564), la mesure des qualités optiques de la solution radio-pharmaceutique à l'aide d'un détecteur de lumière ultraviolette et de lumière visible (502) ;
Lorsque la solution radio-pharmaceutique se déplace au travers d'une ligne de fluide (564), la mesure de la radioactivité de l'échantillon de solution radio-pharmaceutique dans ladite ligne de fluide (564) à l'aide d'un détecteur de radiation (542) ;
Le passage de la solution radio-pharmaceutique depuis ladite ligne de fluide (564) dans une colonne à chromatographie liquide haute performance (515), ladite colonne à chromatographie liquide haute performance (515) devant séparer de façon moléculaire des espèces différentes dans l'échantillon de solution radio-pharmaceutique en un nombre d'espèces séparées moléculairement différentes ;
Où ladite méthode se **caractérise par** l'utilisation d'un détecteur à indice de réfraction (505) pour mesurer la quantité de chaque espèce séparée moléculairement différente car chaque espèce séparée moléculairement différente émerge de ladite colonne à chromatographie liquide haute performance (515) ; et
L'utilisation dudit détecteur de radiation (542) pour mesurer la radioactivité de chaque espèce séparée moléculairement différente après que chaque espèce séparée moléculairement différente émerge de ladite colonne à chromatographie liquide haute performance (515).

3. La méthode automatisée de la revendication 2 comprenant de plus la mesure du pH de la solution radio-pharmaceutique.

4. La méthode d'au moins une des revendications 2 ou 3 où la solution radio-pharmaceutique inclut un radio-isotope sélectionné à partir du groupe se composant de carbone-11, azote-13, oxygène-15, et fluorine-18.

5. La méthode d'au moins une des revendications 2 à 4 où ladite solution radio-pharmaceutique inclut [¹⁸F]-2-fluoro-2-déoxy-D-glucose.
